Europäisches Patentamt

European Patent Office

Office européen des brevets

(19)

(11) **EP 0 901 255 A1**

(12) **DEMANDE DE BREVET EUROPEEN**

(43) Date de publication:
**10.03.1999 Bulletin 1999/10**

(51) Int Cl.⁶: **H04L 25/49**

(21) Numéro de dépôt: **98402133.7**

(22) Date de dépôt: **28.08.1998**

(84) Etats contractants désignés:
**AT BE CH CY DE DK ES FI FR GB GR IE IT LI LU MC NL PT SE**
Etats d'extension désignés:
**AL LT LV MK RO SI**

(30) Priorité: **08.09.1997 FR 9711137**

(71) Demandeur: **STMicroelectronics SA**
**94250 Gentilly Cedex (FR)**

(72) Inventeurs:
• **Fensch, Thierry**
  **38000 Grenoble (FR)**
• **Kohlenberger, Gérald**
  **38000 Grenoble (FR)**
• **Cornu, Céline**
  **38120 Saint Egreve (FR)**

(74) Mandataire: **Casalonga, Axel**
**BUREAU D.A. CASALONGA - JOSSE**
**Morassistrasse 8**
**80469 München (DE)**

(54) **Procédé et dispositif de transcodage d'informations numériques**

(57)    On représente les symboles du code 4B3T par des bits de signe et de magnitude d'une façon analogue aux bits de signe et de magnitude représentant les symboles du code 2B1Q. On utilise chaque paire de bits de signe (BS) et de magnitude (BM) pour commander un filtre commun de mise en forme (FMF) délivrant à partir d'une mémoire (MM) contenant des échantillons numériques représentant partiellement les impulsions de codage, un signal numérique échantillonné (SCH) représentatif du signal analogique transmis sur la ligne téléphonique.

## FIG.6

## Description

L'invention concerne le transcodage en bande de base d'informations numériques destinées à être transmises sur une ligne téléphonique.

L'homme du métier sait qu'un transcodage en bande de base comporte classiquement deux étapes, à savoir une étape de codage proprement dit qui associe à une séquence d'informations numériques successives, un symbole prédéterminé, puis une étape dite de mise en forme, qui associe à chaque symbole une impulsion élémentaire de durée prédéterminée.

Parmi les codes utilisés, on peut en citer un premier type connu par l'homme du métier sous la dénomination 2B1Q et défini dans les normes ETSI ETR 080 (norme européenne) et ANSI T1.601 (norme américaine). On peut également citer un deuxième type de codage connu par l'homme du métier, notamment sous la dénomination 4B3T et défini plus précisément dans les normes ETSI ETR 080 et FTZ 1 TR 220 (norme allemande).

L'invention s'applique avantageusement mais non limitativement à la transmission d'informations numériques dans le cadre d'un réseau numérique à caractère universel, à savoir le réseau numérique à intégration de services (RNIS ou ISDN en langue anglaise) et spécifié également dans les normes ETSI ETR 080 (norme européenne) et ANSI T1.601 (norme américaine).

Brièvement, les trois caractéristiques principales du RNIS sont les suivantes :

- la possibilité offerte, à partir d'un même accès, de disposer simultanément de services téléphoniques, télématiques et même de vidéocommunications,
- une transmission numérique intégrale d'abonné à abonné avec une connexité numérique dans les différents centres de commutation,
- une signalisation uniquement en mode message entre les différentes entités fonctionnelles (terminaux, commutateurs, serveurs, ...).

L'architecture du réseau local de raccordement des usagers au réseau RNIS comporte essentiellement, du côté abonné, un terminal numérique de réseau (TNR) auxquels sont raccordés les différents terminaux de l'usager et, du côté commutateur, un terminal de ligne (TL) qui assure sensiblement les mêmes fonctions que le terminal TNR. Entre le terminal TNR et le terminal TL, se situe la ligne d'abonné (interface U) constituée d'une paire de câbles en cuivre dont les caractéristiques (longueur maximale, débit utile, taux d'erreur,...) sont normalisées.

Ainsi, le débit utile est de 144 kbits/s constitué de deux canaux B à 64 kbits/s pour le transport des informations utiles et d'un canal D de 16 kbits/s pour le transport des bits de contrôle.

La ligne d'abonné permet donc d'utiliser le RNIS dit "bande étroite" dans lequel l'accès au débit de base, encore appelé 2B+D, est limité à 144 kbits/s. L'utilisation des codes tels que le code 4B3Tou le code 2B1Q, permet de réduire la bande spectrale utilisée pour la transmission.

On connaît actuellement des émetteurs fonctionnant soit en code 2B1Q, soit en code 4B3T. Lorsque l'on souhaite utiliser un transcodage particulier en bande de base, il est nécessaire d'utiliser un terminal numérique de réseau contenant un codeur spécifique du codage employé. Le changement du type de code nécessite de remplacer le terminal numérique de réseau par un autre terminal numérique de réseau spécifiquement adapté au nouveau code utilisé.

L'invention vise à proposer un dispositif commutable de transcodage en bande de base permettant au sein d'un même boîtier, de pouvoir disposer d'un circuit unique comportant notamment un filtre commun de mise en forme des symboles aisément configurable, en particulier à partir d'un signal logique, pour passer d'un code à un autre, en particulier du code 2B1Q au code 4B3T et inversement.

L'invention propose donc un dispositif de transcodage en bande de base d'informations numériques, ces informations numériques étant destinées à être transmises sur une ligne téléphonique au sein d'un signal analogique délivré au transformateur de ligne et constitué d'impulsions respectivement associées à des symboles obtenus par le codage desdites informations numériques.

Selon une caractéristique générale de l'invention, le dispositif comprend des moyens de prétraitement aptes, en présence d'une première valeur d'un signal de sélection, à extraire desdites informations numériques, à une première fréquence de délivrance (typiquement 80 kHz), des premières paires successives de bits comportant chacune un premier bit dit de "signe" et un deuxième bit de "magnitude" de façon à former pour chaque première paire l'un des quatre symboles d'un premier type de codage en bande de base dit "codage 2B1Q". Les moyens de prétraitement sont également aptes, en présence d'une deuxième valeur du signal de sélection, à effectuer un deuxième type de codage dit "codage 4B3T", et à délivrer, à une deuxième fréquence de délivrance (typiquement 120 kHz), chacun des trois symboles de ce deuxième type de codage sous la forme d'une deuxième paire de bits comportant un premier bit dit de "signe" et un deuxième bit dit de "magnitude" de valeurs prédéterminées.

En d'autres termes, quelle que soit la valeur du signal de sélection, c'est-à-dire quel que soit le type de codage sélectionné, les moyens de prétraitement vont toujours délivrer des paires de bits de signe et de bits de magnitude alors que le codage 4B3T ne prévoit pas classiquement de désigner chacun des trois symboles possibles du code 4B3T par une paire de bits.

Le dispositif de transcodage selon l'invention comporte également des première et deuxième mémoires contenant respectivement des premiers et deuxièmes échantillons numériques respectivement représentatifs d'une partie au moins des différentes impulsions prédéterminées respectivement associées aux différents symboles des premier et deuxième types de codage.

Le dispositif de transcodage comprend également des moyens de mise en forme, ou filtre de mise en forme, aptes à lire le contenu de la première ou de la deuxième mémoire à une même fréquence de lecture prédéterminée quelle que soit la valeur du signal de sélection et aptes, en fonction de la valeur du signal de sélection, à élaborer à partir du contenu de la mémoire correspondante et des valeurs successives des bits de magnitude et de signe, un signal numérique de sortie échantillonné à ladite fréquence de lecture, ce signal numérique de sortie étant compatible avec le codage sélectionné et représentatif du signal analogique de transmission correspondant.

L'une des caractéristiques essentielles de l'invention consiste donc à associer à chaque symbole du code 4B 3T un bit de signe et un bit de magnitude de valeurs prédéterminées, de façon à effectuer un parallèle avec le bit de signe et le bit de magnitude utilisés dans le code 2B1Q, et de façon à considérer ce bit de signe comme un unique premier bit de commande pour le filtre de mise en forme et le bit de magnitude comme un unique deuxième bit de commande pour le filtre commun de mise en forme, et ce quel que soit le type de codage sélectionné.

Par ailleurs, en combinaison avec cette caractéristique, les moyens de mise en forme lisent les échantillons stockés à une même fréquence de lecture (1,92 MHz) et l'on délivre le signal numérique de sortie échantillonné à cette même fréquence de lecture quel que soit le codage utilisé, alors que les valeurs successives des bits de signe et de magnitude sont délivrées à deux fréquences de délivrance différentes pour les deux types de codage.

Afin de simplifier la réalisation, du dispositif, il est avantageusement prévu que tous les échantillons numériques stockés dans les première et deuxième mémoires soient respectivement obtenus par deux échantillonnages différents d'une même fonction mathématique de base, par exemple une cosinusoïde surélevée élevée à une puissance entière, de préférence à la puissance 4. En outre, le produit entre chaque fréquence de délivrance et le nombre d'échantillons représentatifs d'une impulsion du type correspondant au codage considéré est égal à la fréquence de lecture. Ceci permet à partir d'une même fonction mathématique de base de pouvoir générer numériquement les différentes impulsions des deux types de codage considérés, impulsions qui n'ont pas la même durée temporelle. En effet, toutes les impulsions correspondant aux différents symboles du codage 2B1Q ont une durée temporelle de 25 µs, tandis que toutes les impulsions associées aux différents symboles du codage 4B3T ont une deuxième durée temporelle de 16,66 µs. Ainsi, en pratique, on stokera 24 échantillons pour représenter une impulsion du type 2B1Q, tandis que l'on stockera seulement 16 échantillons pour représenter une impulsion du type 4B3T.

Par ailleurs, chacune des deux fréquences de délivrance des symboles des deux types de codage correspond à une période temporelle de délivrance égale à la moitié de la durée temporelle des impulsions du type de codage sélectionnées. En d'autres termes, pour chaque type de codage, la durée d'un symbole est égale à la moitié de la durée de l'impulsion correspondante. Aussi, les moyens de mise en forme élaborent, à ladite fréquence de délivrance sélectionnée, les échantillons du signal de sortie correspondant en additionnant, à ladite fréquence de lecture, des échantillons tirés des échantillons numériques stockés dans la mémoire correspondante et relatifs au symbole courant avec des échantillons tirés des échantillons numériques stockés dans ladite mémoire correspondante et relatifs au symbole précédent.

On choisit avantageusement la forme des impulsions de façon à ce que, quel que soit le type de codage utilisé, chaque impulsion non nulle comporte des fronts avant et arrière symétriques s'étendant respectivement temporellement sur les première et deuxième moitiés de la durée temporelle d'impulsion correspondante. Aussi, afin de minimiser la taille mémoire, les première et deuxième mémoires contiennent uniquement des échantillons relatifs à l'un des deux fronts de chaque impulsion non nulle et de polarité prédéterminée, par exemple relatifs au front avant de l'impulsion de polarité positive (front montant). Les moyens de mise en forme comportent alors des moyens de reconstitution aptes à élaborer les échantillons relatifs à l'autre front de chaque impulsion non nulle et de polarité prédéterminée (par exemple le front descendant de l'impulsion de polarité positive) ainsi que les échantillons relatifs aux front avant et arrière de chaque impulsion non nulle de polarité inverse (les fronts "montant" et "descendant" de l'impulsion de polarité négative).

Afin, notamment, de simplifier la réalisation matérielle du filtre de mise en forme, il est particulièrement avantageux de prévoir une table de correspondance spécifique prédéterminée entre les valeurs des bits de signe et de magnitude affectées aux différents symboles du codage 4B3T et les valeurs des bits de signe et de magnitude formant les symboles du code 2B1Q.

Ainsi, pour le deuxième type de codage (4B3T), on affecte aux deux impulsions de niveau de tension non nul, des bits de signe et de magnitude respectivement égaux de préférence à ceux affectés aux deux impulsions de niveau bas de polarité homologue du premier type de codage ou bien éventuellement aux deux impulsions de niveau haut de polarité homologue du premier type de codage. En pratique, on affecte de préférence au symbole +2 du codage 4B3T, la valeur 1 pour le bit de signe et pour le bit de magnitude et on affecte au symbole -2 la valeur 0 pour le bit de signe et la valeur 1 pour le bit de magnitude.

Par ailleurs, on affecte une valeur nulle aux bits de signe de magnitude affectés à l'impulsion de niveau nul du code 4B3T.

En ce qui concerne les moyens de prétraitement, ceux-ci comportent, selon un mode de réalisation de l'invention, des moyens de conversion série/parallèle aptes, en présence de la première valeur du signal de sélection (code 2B1Q), à recevoir le flot d'informations numériques d'entrée et à délivrer successivement à la première fréquence de délivrance, les paires de bits de signe et de magnitude aux moyens de mise en forme. Par ailleurs, afin de pouvoir mettre en oeuvre le deuxième type de codage (4B3T), les moyens de prétraitement comportent par ailleurs un codeur spécifique apte en présence de la deuxième valeur du signal de sélection, à extraire du flot d'informations numériques d'entrée des groupes successifs de quatre informations numériques et à délivrer aux moyens de mise en forme, pour chacun de ces groupes, successivement et à la deuxième fréquence de délivrance, trois paires de bits de signe et de magnitude représentatifs respectivement de trois symboles de ce deuxième type de codage.

Dans un mode de réalisation avantageux, le codeur spécifique comporte une mémoire principale adressable par un mot d'adresse contenant le groupe considéré de quatre informations numériques. La mémoire contient alors à chaque adresse un mot de six bits contenant les valeurs des trois paires de bits de signe et de magnitude associées à la séquence correspondante de trois symboles. Le codeur comporte des moyens d'adressage pour adresser la mémoire principale à une fréquence de codage (typiquement 40 kHz) égale au tiers de la deuxième fréquence de délivrance (120 kHz), et des moyens de lecture pour délivrer, à ladite deuxième fréquence de délivrance, les paires successives de bits de signe et de magnitude. En outre, les signaux d'horloge correspondant respectivement aux fréquences de codage et de délivrance sont mutuellement déphasés. En pratique, les fronts montants de l'horloge de codage (40 KHz) coïncident avec des fronts descendants du signal d'horloge associé à la deuxième fréquence de délivrance (120 KHz).

L'invention a également pour objet un procédé de transcodage en bande de base d'informations numériques destinées à être transmises sur une ligne téléphonique au sein d'un signal analogique délivré au transformateur de ligne et constitué d'impulsions respectivement associées à des symboles obtenus par le codage desdites informations numériques.

Selon une caractéristique générale de l'invention, on stocke respectivement dans des première et deuxième mémoires des premiers et deuxièmes échantillons numériques respectivement représentatifs d'une partie au moins des différentes impulsions prédéterminées et respectivement associées aux différents symboles d'un premier type de codage dit 2B1Q et d'un deuxième type de codage dit 4B 3T; on sélectionne le type de codage désiré pour ladite transmission, et, en cas de sélection du premier type de codage, on extrait du flot desdites informations numériques, à une première fréquence de délivrance, des premières paires successives de bits comportant chacune un premier bit dit de signe et un deuxième bit dit de magnitude de façon à former pour chaque première paire, l'un des quatre symboles du premier type de codage. Par contre, en cas de sélection du deuxième type de codage, on délivre, à une deuxième fréquence de délivrance, chacun des trois symboles de ce deuxième type de codage sous la forme d'une deuxième paire de bits comportant un premier bit dit de signe et un deuxième bit dit de magnitude et ayant des valeurs prédéterminées . On lit le contenu de la première ou de la deuxième mémoire à une même fréquence de lecture prédéterminée quelle que soit la sélection effectuée, et, en fonction de ladite sélection, on élabore à partir du contenu de la mémoire correspondante et des valeurs successives des bits de magnitude et de signe, un signal numérique de sortie échantillonné à ladite fréquence de lecture, ce signal numérique de sortie étant compatible avec le codage sélectionné et représentatif dudit signal analogique de transmission correspondant.

D'autres avantages et caractéristiques de l'invention apparaîtront à l'examen de la description détaillée d'un mode de réalisation et de mise en oeuvre, nullement limitatif, et des dessins annexés, sur lesquels :

la figure 1 illustre de façon très schématique les composants essentiels d'un émetteur selon l'invention,
la figure 2 illustre de façon schématique le codage 2B1Q,
la figure 3 illustre de façon schématique le codage 4B3T,
la figure 4 illustre plus en détail mais toujours de façon très schématique la structure interne d'un codeur spécifique 4B3T selon l'invention,
la figure 5 est une représentation schématique d'une impulsion utilisée dans le dispositif selon l'invention, avant délivrance au transformateur de ligne,
la figure 6 illustre plus en détail mais de façon très schématique la structure interne du filtre commun de mise en forme du dispositif selon l'invention, et
la figure 7 représente plus en détail la configuration interne de la mémoire de stockage des différents échantillons numériques.

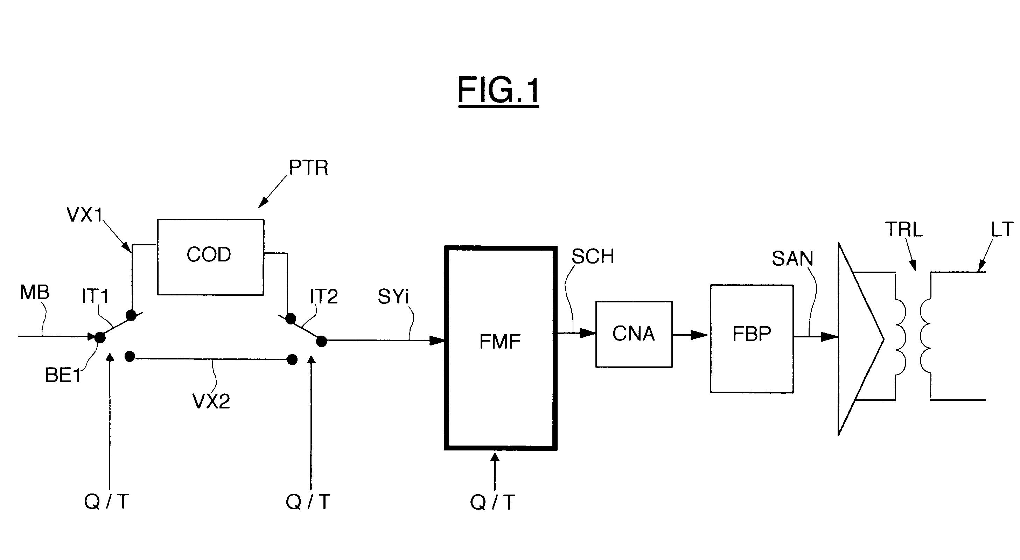

L'émetteur représenté sur la figure 1 comporte un dispositif de transcodage selon l'invention possédant une borne d'entrée BE1 pour recevoir un message binaire MB sous la forme d'un flot d'informations numériques à un débit de 144 kbits/s.

Le dispositif de transcodage fournit alors en sortie un signal numérique échantillonné SCH. Après passage dans un convertisseur numérique/analogique CNA puis dans un filtre analogique passe-bas de lissage FBP éliminant les parasites haute fréquence, un signal analogique SAN est délivré à un transformateur de ligne TRL en vue de sa transmission sur la paire de fils de cuivre formant la ligne téléphonique LT.

Ce signal analogique SAN est constitué d'impulsions respectivement associées à des symboles obtenus par le codage des informations numériques d'entrée.

Le dispositif de transcodage selon l'invention comporte essentiellement des moyens de prétraitement PTR et des moyens de mise en forme ou filtre de mise en forme FMF.

Les moyens de prétraitement comportent essentiellement deux voies VX1 et VX2 qui peuvent être commutées aux moyens d'interrupteur IT1 et IT2 commandés par un signal logique de sélection Q/T. En pratique, les interrupteurs IT1 et IT2 peuvent être formés de multiplexeurs. Le signal logique de sélection Q/T permet, selon sa valeur, de sélectionner un premier type de codage, en l'espèce le codage 2B1Q ou un deuxième type de codage, en l'espèce le codage 4B3T.

Dans le cas où le codage 4B3T est sélectionné, les informations numériques d'entrée sont codées dans un codeur spécifique COD, dont on reviendra plus en détail ci-après sur la structure. Si, par contre le codage 2B1Q est sélectionné, la présence d'un codeur spécifique n'est pas nécessaire. De simples moyens de conversion série/parallèle, par exemple réalisés au moyen d'un registre à décalage, et non représentés sur la figure 1 à des fins de simplification, sont alors disposés sur la voie de traitement VX2 de façon, comme on le verra plus en détail ci-après, à extraire du flot d'informations binaires d'entrée des paires successives de bits.

Quel que soit le type de codage utilisé, les moyens de prétraitement PTR délivrent au filtre de mise en forme FMF à partir du flot binaire d'entrée, des symboles SYi que l'on précisera plus en détail ci-après. Ce filtre de mise en forme a essentiellement pour fonction de convertir les différents symboles reçus en impulsions numériques de façon à former le signal numérique échantillonné SCH. Pour le codage 2B1Q, les symboles sont délivrés à une première fréquence de délivrance égale à 80 kHz/s, tandis que pour le codage 4B3T, les différents symboles sont délivrés à une deuxième fréquence de délivrance égale à 120 KHz. Le signal logique de sélection Q/T va permettre de rendre la structure interne du filtre commun FMF compatible avec l'un ou l'autre des codages utilisés.

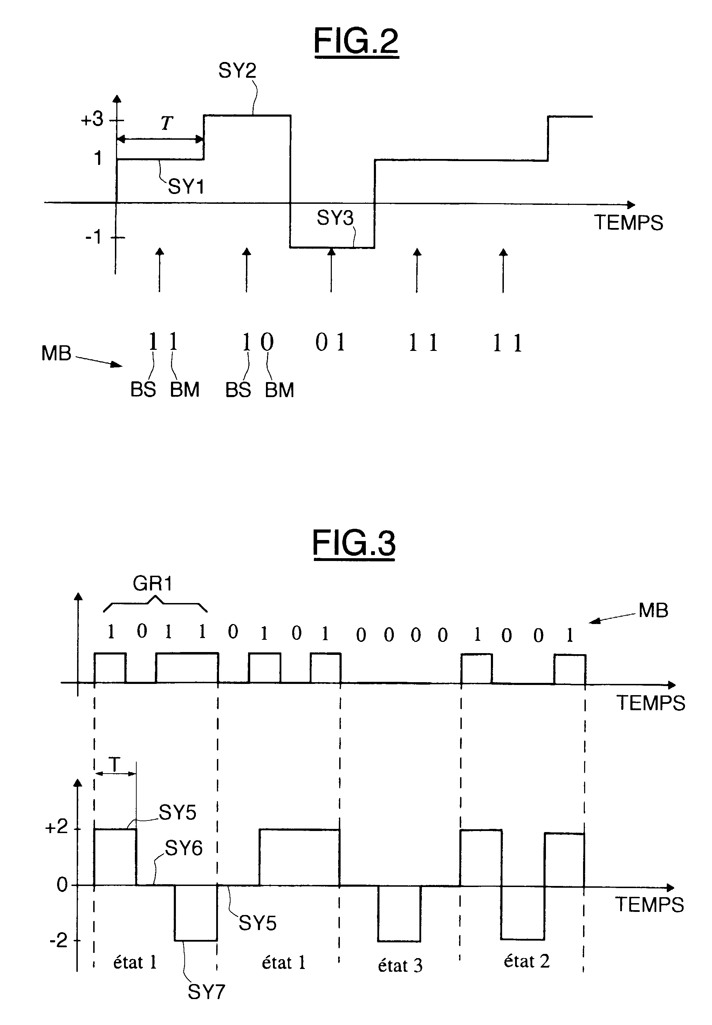

Comme illustré sur la figure 2, le code 2B1Q associe à deux bits du flot MB d'informations binaires d'entrée, un des quatre symboles (ou quaternaire) +1, +3, -1, -3 et respectivement référencés SY1, SY2 et SY3 (le symbole -3 n'est pas représenté sur l'exemple illustré sur la figure 2).

Chaque paire de bits extraits du flot d'informations binaires comporte un premier bit dit "bit de signe" BS, et un deuxième bit dit" bit de magnitude" BM. Il y a alors une correspondance bi-univoque entre les valeurs des bits de signe et de magnitude et les symboles, conformément à la table de codage ci-dessous.

| signe | magnitude | symbole |
|-------|-----------|---------|
| 1 | 0 | +3 |
| 1 | 1 | +1 |
| 0 | 1 | - 1 |
| 0 | 0 | -3 |

Chaque symbole SYi du code 2B1Q a une durée T = 12,5 $\mu$s. En d'autres termes, les symboles SYi du code 2B1Q sont délivrés à la fréquence de 80 KHz.

Comme illustré sur la figure 3, le codage 4B3T fait correspondre à un groupe GR1 de quatre bits du flot d'entrée, une séquence de trois symboles, choisis parmi les symboles, +2, 0,-2 respectivement référencés SY5, SY6 et SY7.

L'homme du métier sait que la correspondance entre la valeur des bits des différents groupes et les séquences correspondantes de trois symboles, sont également fixées en fonction d'un état courant pouvant prendre 4 valeurs, et ce conformément à la table de codage ci-dessous :

| bits | état 1 | état 2 | état 3 | état 4 |
|------|--------|--------|--------|--------|
| 0001 | 0- + | 0 - + | 0 - + | 0 - + |
| 0111 | -0 + | - 0 + | - 0 + | - 0 + |
| 0100 | - + 0 | - + 0 | - + 0 | - + 0 |

(suite)

| bits | état 1 | état 2 | état 3 | état 4 |
|---|---|---|---|---|
| 0010 | + - 0 | + - 0 | + - 0 | + - 0 |
| 1011 | + 0 - | + 0 - | + 0 - | + 0 - |
| 1110 | 0 + - | 0 + - | 0 + - | 0 + - |
| 1001 | + - + | + - + | + - + | - - - |
| 0011 | 0 0 + | 0 0 + | 0 0 + | - - 0 |
| 1101 | 0 + 0 | 0 + 0 | 0 + 0 | 0 - 0 |
| 1000 | + 0 0 | + 0 0 | + 0 0 | 0 - - |
| 0110 | - + + | - + + | - - + | - - + |
| 1010 | + + - | + + - | + - - | + - - |
| 1111 | + 0 + | 0 0 - | 0 0 - | 0 0 - |
| 0000 | + 0 + | 0 - 0 | 0 - 0 | 0 - 0 |
| 0101 | 0 + + | - 0 0 | - 0 0 | - 0 0 |
| 1100 | + + + | - + - | - + - | - + - |

Dans cette table, à des fins de simplification, les signes 0, -, +, représentent respectivement les symboles 0, -2 et +2. En outre, l'homme du métier sait que l'état suivant $ET_{k+1}$ de la table de codage est déterminé par la somme de la valeur de l'état courant $ET_k$ augmentée de la somme des trois symboles codés à l'instant courant.

En ce qui concerne le code 4B3T, la durée T d'un symbole est égale à 8,33 μs, ce qui correspond à la deuxième fréquence de délivrance des symboles de 120 KHz.

Selon l'invention et afin de pouvoir utiliser un filtre commun de mise en forme, on associe à chaque symbole du code 4B3T également une paire de bits dans laquelle le premier bit est assimilé à un bit de signe d'une façon analogue au code 2B1Q, tandis que le deuxième bit de la paire est assimilé à un bit de magnitude conformément au code 2B1Q.

Plus précisément, la correspondance entre les bits de signe et les magnitudes et les symboles du code 4B3T utilisés dans le mode de réalisation décrit ici, est illustrée dans la table ci-dessous dans laquelle, on a également rappelé la correspondance entre les bits de signe de magnitude d'une part, et les symboles du code 2B1Q d'autre part :

| signe | magnitude | symbole 2B1Q | symbole 4B3T |
|---|---|---|---|
| 1 | 0 | +3 | 0 |
| 1 | 1 | +1 | +2 |
| 0 | 1 | -1 | -2 |
| 0 | 0 | -3 | 0 |

A cet égard, le codeur spécifique COD est apte, en présence du signal de sélection correspondant à une sélection du code 4B3T, à extraire du flot d'informations numériques les groupes successifs GR de quatre informations numériques, et à délivrer au moyen de mise en forme FMF, pour chacun de ces groupes, successivement et à la fréquence de délivrance de 120 KHz, trois paires de bits de signe et de magnitude BM,BS représentatifs respectivement de trois symboles de ce codage 4B3T.

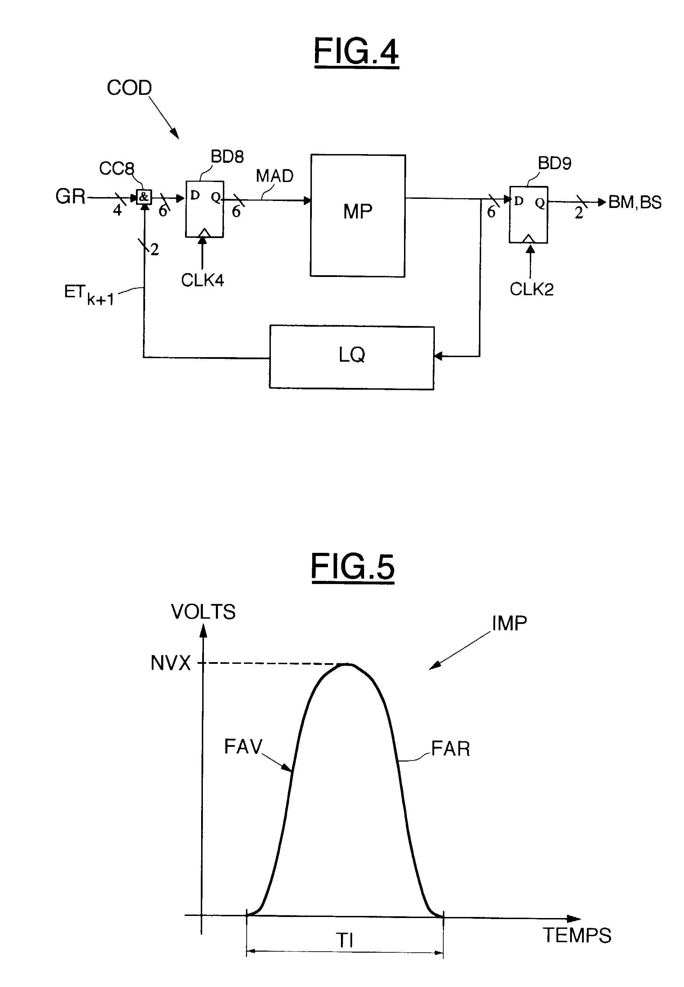

Plus précisément, comme illustré sur la figure 4, le codeur COD comporte une mémoire principale MP adressable par un mot d'adresse MAD délivré par une bascule de type D, référencée BD8, et commandée par le signal d'horloge CLK4 dont la fréquence est le tiers de la fréquence du signal d'horloge CLK2 correspondant à la fréquence de délivrance 120 KHz.

Il convient de noter ici que les signaux d'horloge CLK2 et CLK4 sont mutuellement déphasés. En d'autres termes, ces signaux d'horloge doivent être tels qu'il n'aient jamais de fronts montants simultanés. On pourra par exemple choisir un déphasage tel que les fronts montants de l'horloge CLK4 correspondent au front descendant de l'horloge CLK2.

La mémoire principale contient, à chaque adresse, un mot de 6 bits contenant les valeurs des trois paires de bits de signe de magnitude associées à la séquence correspondante SPB de trois symboles. Plus précisément, selon un mode de réalisation, chaque mot d'adresse MAD comporte deux bits de poids fort représentant l'état $ET_k$ du codeur, tandis que les quatre autres bits représentent la séquence de symboles à coder. Chaque séquence de trois symboles SPB est mémorisée à l'adresse correspondante au moyen des bits de signe et des bits de magnitude suivant la table de correspondance ci-dessus. Ainsi, la mémoire principale contient 64 mots de 6 bits chacun.

Les symboles, c'est-à-dire les paires successives de bits de signe et de magnitude, sont envoyés un à un vers le filtre de mise en forme, après stockage dans une bascule D référencée BD9, à chaque front montant de l'horloge CLK2.

En outre, afin d'insérer dans chaque mot d'adresse MAD, les deux bits de poids fort correspondant à l'état courant du codeur ETk, on prévoit de reboucler la sortie de mémoire MP par une logique combinatoire LQ, aisément réalisable par l'homme du métier à partir de portes logiques, et par des moyens de concaténation CC8 recevant d'une part le groupe de 4 bits GR et, d'autre part, la sortie de la logique combinatoire LQ. La sortie de ces moyens de concaténation est reliée à l'entrée de la bascule BD8.

L'homme du métier sait que le codage 4B3T nécessite l'insertion à des instants prédéterminés de mots de synchronisation et de maintenance contenant des séquences prédéterminées de symboles. Ces séquences prédéterminées de symboles, également codées sous forme de bits de signe et de magnitude, seront insérées au moyen d'un multiplexeur connecté en sortie de la bascule BD9 et non représenté ici à des fins de simplification.

Quel que soit le codage utilisé, chaque symbole est associé à une impulsion IMP (figure 5) ayant une durée d'impulsion TI et un niveau maximum NVX correspondant en volt sensiblement à la valeur du symbole. Ainsi, à titre indicatif, le symbole +3 du code 2B1Q est associé à une impulsion de niveau sensiblement égal à + 3 Volts (en réalité 2,5 Volts spécifiés). En pratique, les normes de transmission stipulent un gabarit temporel fréquentiel pour chaque impulsion présente sur la ligne téléphonique, c'est-à-dire après le transformateur de ligne.

Selon l'invention, on utilise pour chaque symbole, quel que soit le type de codage, une impulsion ayant des fronts avant FAV et arrière FAR (fronts montant et descendant dans le cas d'une impulsion positive) symétriques et s'étendant respectivement sur la première moitié et la deuxième moitié de la durée d'impulsion TI. Par ailleurs, la fonction mathématique de base déterminant l'allure du front arrière de l'impulsion IMP, est une fonction cosinusoïde surélevée élevée à la puissance 4, de formule :

$$\left( \frac{1}{2} \ (1 + \cos \pi t) \right)^4$$

La fonction mathématique du front montant de l'impulsion est alors égale à la différence entre cette fonction cosinusoïde et 1 pour une impulsion dont le niveau est normalisé à 1.

D'une façon générale, des puissances entières de 1 jusqu'à 6 sont possibles. Ceci étant, la puissance 4 réalise le meilleur compromis entre la raideur des fronts de l'impulsion et la position de celle-ci à l'intérieur du gabarit normalisé.

Il est à noter enfin que l'impulsion IMP représentée sur la figure 5 est celle délivrée au primaire du transformateur de ligne et que la durée TI de cette impulsion est égale au double de la durée du symbole. Ainsi, les impulsions correspondant au symbole du code 2B1Q ont une largeur TI de 25 μs, tandis que les impulsions correspondant au symbole du code 4B3T ont une largeur TI de 16,66 μs.

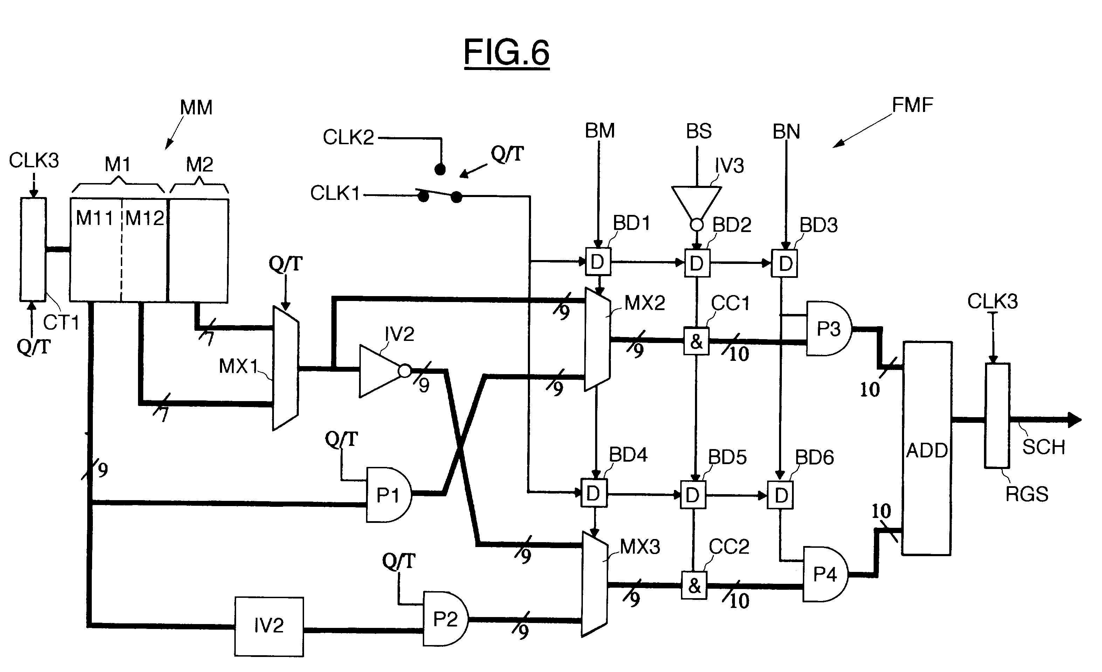

On va maintenant décrire plus en détail, en se référant plus particulièrement à la figure 6, la structure interne du filtre de mise en forme FMF.

Celui-ci comporte une mémoire morte MM fonctionnellement divisée en une première mémoire M1 et en une deuxième mémoire M2. La première mémoire M1 est elle-même fonctionnellement divisée en une première partie M11 et en une deuxième partie M12. Un compteur CT1 cadencé à une fréquence de lecture (ou d'adressage) CLK3 égale à 1,92 MHz, permet d'adresser la mémoire MM. Ce compteur est par ailleurs également commandé par le signal de sélection Q/T.

La sortie de la deuxième mémoire M2 ainsi que la sortie de la deuxième partie M12 de la mémoire M1 sont respectivement reliées aux deux entrées d'un multiplexeur MX1 commandé par le signal de sélection Q/T. La sortie de ce multiplexeur MX1 est reliée d'une part à une première entrée d'un multiplexeur MX2 et, d'autre part, par l'intermédiaire d'un inverseur logique IV2 à une première entrée d'un multiplexeur MX3.

La sortie de la première partie M11 de la première mémoire M1 est reliée d'une part à la deuxième entrée du multiplexeur MX2 par l'intermédiaire d'une porte logique ET référencée P1. Cette porte logique P1 reçoit par ailleurs sur son autre entrée le signal logique de sélection Q/T.

La sortie de la première partie M1 1 de la mémoire M1 est d'autre part reliée à la deuxième entrée du multiplexeur MX3 par l'intermédiaire d'un moyen inverseur IV1 et d'une porte logique ET référencée P2. Cette porte logique P2 reçoit également sur son autre entrée le signal logique de sélection Q/T.

La sortie du multiplexeur MX2 est reliée à une première entrée d'un additionneur ADD par l'intermédiaire du premier moyen de concaténation CC1 et d'une porte logique ET référencée P3.

D'une façon analogue, la sortie du multiplexeur MX3 est reliée à la deuxième entrée de l'additionneur ADD par l'intermédiaire d'un deuxième moyen de concaténation CC2 et d'une porte logique ET référencée P4.

Le multiplexeur MX2 est commandé successivement par les bits de magnitude BM délivrés successivement par une bascule de type D référencée BD1 et commandée au rythme du signal d'horloge CLK1 ou CLK2 (correspondant aux première et deuxième fréquences de délivrance, c'est-à-dire 80 KHz ou 120 KHz) en fonction de la valeur du signal de sélection Q/T, c'est-à-dire en fonction du type de codage sélectionné.

Le multiplexeur MX3 est également commandé par les bits successifs de magnitude BM, retardés temporellement d'un cycle de l'horloge CLK1 ou CLK2, au moyen d'une autre bascule de type D référencée BD4.

Le premier moyen de concaténation CC1 reçoit également en entrée les bits de signe PS, inversés par un inverseur IV3, et délivrés successivement par une bascule D référencée BD2, commandée également par le signal d'horloge CLK1 ou CLK2.

Par analogie, le deuxième moyen de concaténation CC2 reçoit également les bits de signe inversés mais temporellement retardés d'un cycle de l'horloge CLK1 ou CLK2 au moyen d'une bascule D référencée BD5.

Deux autres bascules de type D, respectivement référencées BD3 et BD6 permettent de délivrer successivement, à la fréquence CLK1 ou CLK2, des bits de valeur prédéterminée BN sur la deuxième entrée de la porte 3, et les mêmes bits temporellement retardés d'un cycle d'horloge sur la deuxième entrée de la porte logique P4. Ces moyens permettent notamment de réaliser des modes de test du filtre.

Un registre de sortie RGS, commandé à la fréquence du signal d'horloge CLK3, c'est-à-dire à 1,92 MHz, permet de délivrer, à cette fréquence, les différents échantillons du signal échantillonné SCH.

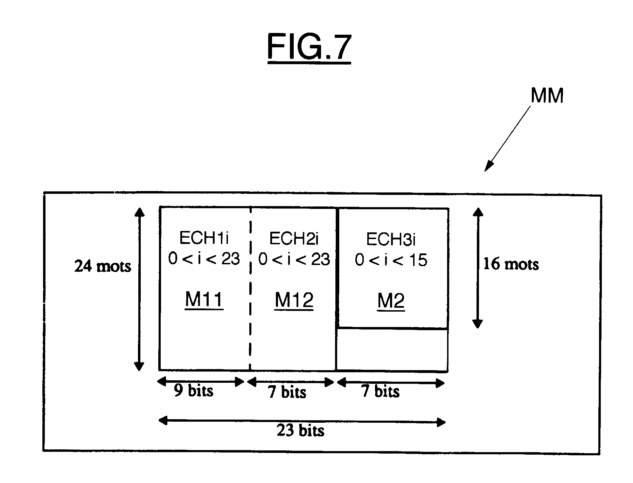

On va maintenant décrire plus en détail, en se référant plus particulièrement à cette figure 6 ainsi qu'à la figure 7, le mode de fonctionnement du filtre FMF.

Alors qu'il eût été possible de concevoir un filtre FMF comportant une mémoire MM stockant tous les échantillons numériques associés à tous les types d'impulsions de tous les symboles des deux types de codage utilisés, il a été jugé préférable, dans le mode de réalisation décrit ci-dessus, afin d'économiser de la mémoire, de stocker dans la première partie M11 de la mémoire M1 les échantillons correspondant au front avant (front montant) de l'impulsion associée au symbole +3 du code 2B1Q, de stocker dans la deuxième partie M12 de la première mémoire M1 les échantillons du front montant de l'impulsion associée au symbole +1 du code 2B1Q, et de stocker dans la mémoire M2 les échantillons correspondant au front montant d'une impulsion réduite de moitié en amplitude par rapport à l'impulsion associée au symbole +2 du code 4B3T.

Etant donné que la fréquence d'adressage (ou de lecture) est la même pour les deux types de codage (1,92 MHz), que la même fonction de base a été utilisée pour obtenir les échantillons numériques stockés dans la mémoire MM, et que la fréquence de délivrance des symboles des deux types de codage n'est pas la même, le nombre d'échantillons stockés dans la première partie ou dans la deuxième partie de la mémoire M1 est différent du nombre d'échantillons stockés dans la deuxième mémoire M2. Plus précisément, comme illustré sur la figure 7, la première partie M1 1 de la mémoire comporte 24 échantillons ECHli formant 24 mots de 9 bits. La deuxième partie M12 de la première mémoire comporte également 24 échantillons ECH2i formant 24 mots de 7 bits, tandis que la deuxième mémoire M2 comporte seulement 16 échantillons ECH3i formés par 16 mots de 7 bits.

De ce fait, le compteur de l'adresse CT1 va compter de 0 à 23 ou de 0 à 15 en fonction de la valeur du signal de sélection Q/T.

En fonctionnement, le multiplexeur MX1 permet, en fonction de la valeur du signal de sélection Q/T, de choisir les échantillons correspondants soit au symbole +1 du code 2B1Q, soit au symbole +2 du code 4B3T. L'inverseur IV2 permet ensuite, par une inversion bit à bit, de reconstituer les fronts descendants des impulsions correspondantes. Il convient de noter ici que cette inversion bit à bit par un inverseur, permet d'obtenir le front descendant en raison du codage possible de la dynamique maximum des échantillons sur 7 bits. En outre, étant donné que les mots correspondant aux échantillons stockés dans la première partie M11 de la mémoire M1 sont codés sur 9 bits, on complètera les mots de 7 bits des échantillons 2B1Q en rajoutant 2 bits de poids fort nul. En outre, on a également stocké sur des mots de 7 bits les échantillons correspondant au front montant de l'impulsion de code 4B3T d'amplitude réduite +1. Aussi, on effectue en sortie du multiplexeur MXI ou en sortie de l'inverseur IV2 un décalage vers la gauche de ces mots de façon à effectuer une multiplication par deux.

Les portes logique P1 et P2 permettent de choisir, en fonction de la valeur du signal Q/T, entre le symbole +3 du code 2B1Q et le symbole 0 du code 4B3T, ce dernier symbole étant obtenu en délivrant des valeurs nulles aux entrées des multiplexeurs MX2 et MX3.

Le moyen inverseur IV1 reconstitue le front descendant de l'impulsion +3 du code 2B1Q. Ceci étant, puisque le niveau maximum de l'impulsion +3 n'est pas codé sur une séquence de bits tous égaux à 1, il n'a pas été possible d'utiliser ici un inverseur classique bit à bit. Le moyen inverseur IV1 effectue alors l'opération 381 - ECHli.

Ainsi, les inverseurs IV2 et IV1 permettent de reconstituer les fronts descendants FAR des impulsions de polarité positive dont seuls les fronts montants FAV ont été stockés dans la mémoire MM.

La valeur du bit de magnitude BM, commandant directement les multiplexeurs MX2 et MX3, permet de choisir entre les impulsions correspondant soit aux symboles +1 et -1 du code 2B1Q ou aux symboles +2 et -2 du code 4B3T, soit aux symboles +3 et -3 du code 2B1Q ou au symbole nul du code 4B3T.

Le bit de signe BS, inversé par l'inverseur IV3, permet ensuite, en concaténant ce bit de signe inversé à gauche du mot délivré par les multiplexeurs MX2 et MX3, de signer ce mot, c'est-à-dire de choisir entre les impulsions correspondant aux symboles positifs ou entre les impulsions correspondant aux symboles négatifs. On reconstitue ainsi très simplement les impulsions correspondant aux symboles négatifs à partir des échantillons contenus dans la mémoire MM.

Les bascules BD4, BD5 et BD6, ainsi que le multiplexeur MX3, le moyen de concaténation CC2 et la porte P4, permettent de conserver en mémoire les fronts arrière correspondant à l'impulsion du symbole précédant, ces échantillons mémorisés étant ensuite additionnés aux échantillons correspondant au front avant de l'impulsion du symbole courant. On rappelle en effet que chaque fréquence de délivrance des symboles (80 KHz ou 120 KHz) correspond à une période temporelle de délivrance (durée du symbole) égale à la moitié de la durée temporelle des impulsions du type de codage sélectionné.

Après stockage dans le registre de sortie RGS, les différents échantillons du signal numérique SCH sont délivrés à la fréquence CLK3. Bien entendu, la valeur des bits BM et BS sont rafraîchies, soit à la fréquence de 80 KHz pour le code 2B1Q, soit à la fréquence de 120 KHz pour le code 4B3T.

## Revendications

1. Procédé de transcodage en bande de base d'informations numériques destinées à être transmises sur une ligne téléphonique (LT) au sein d'un signal analogique délivré au transformateur de ligne et constitué d'impulsions (IMP) respectivement associées à des symboles (SY) obtenus par le codage desdites informations numériques, caractérisé par le fait qu'on stocke respectivement dans des première et deuxième mémoires (MM1, MM2) des premiers et deuxièmes échantillons numériques respectivement représentatifs d'une partie au moins des différentes impulsions prédéterminées respectivement associées aux différents symboles d'un premier type de codage dit 2B1Q et d'un deuxième type de codage dit 4B 3T, on sélectionne (Q/T) le type de codage désiré pour ladite transmission, et, en cas de sélection du premier type de codage, on extrait du flot desdites informations numériques, à une première fréquence de délivrance (CLK1), des premières paires successives de bits comportant chacune un premier bit dit de signe (BS) et un deuxième bit dit de magnitude (BM) de façon à former pour chaque première paire l'un des quatre symboles (SY) du premier type de codage, tandis qu'en cas de sélection du deuxième type de codage, on délivre, à une deuxième fréquence de délivrance (CLK2), chacun des trois symboles de ce deuxième type de codage sous la forme d'une deuxième paire de bits comportant un premier bit dit de signe (BS) et un deuxième bit dit de magnitude (BM) de valeurs prédéterminées, on lit le contenu de la première ou de la deuxième mémoire à une même fréquence de lecture prédéterminée (CLK3) quelle que soit la sélection effectuée, et, en fonction de ladite sélection, on élabore à partir du contenu de la mémoire correspondante et des valeurs successives des bits de magnitude et de signe, un signal numérique de sortie (SCN) échantillonné à ladite fréquence de lecture (CLK3), compatible avec le codage sélectionné et représentatif dudit signal analogique de transmission correspondant.

2. Procédé selon la revendication 1, dans lequel les quatre symboles du premier type de codage correspondent respectivement à deux impulsions de niveaux bas de tension de polarité inverse (+1,-1) et à deux impulsions de niveaux hauts de tension de polarité inverse (+3,-3), tandis que les trois symboles du deuxième type de codage correspondent respectivement à deux impulsions de niveaux de tension non nuls de polarité inverse (+2,-2) et à une impulsion de niveau nul de tension, caractérisé par le fait que, pour le premier type de codage on affecte la valeur "1" du bit de signe aux deux impulsions de niveaux bas et haut de polarité positive, et la valeur "0" du bit de signe aux deux autres impulsions, tandis que la valeur "1" du bit de magnitude est affectée aux deux impulsions de niveaux bas, et la valeur "0" du bit de magnitude aux deux autres impulsions, par le fait que pour le deuxième type de codage on affecte aux deux impulsions de niveaux de tension non nuls (+2,-2) des bits de signe et de magnitude (BS, BM) respectivement égaux à ceux affectés aux deux impulsions de niveau bas de polarités homologues du premier type de codage ou aux deux impulsions de niveau haut de polarités homologues du premier type de codage, et on affecte une valeur nulle aux bits de signe et de magnitude à l'impulsion de niveau nul, par le fait que tous les échantillons numériques stockés dans les première et deuxième mémoires sont respectivement obtenus par deux échantillonnages différents d'une même fonction mathématique de base, par exemple une cosinusoïde surélevée élevée à une puissance entière, de préférence à la puissance quatre, et par le fait que le produit entre chaque fréquence de délivrance (CLK1, CLK2) et le nombre d'échantillons représentatifs d'une impulsion du type correspondant de codage est égal à la fréquence de lecture (CLK3).

3. Procédé selon la revendication 1 ou 2, dans lequel les impulsions correspondants aux symboles du premier type de codage ont une même première durée temporelle, et les impulsions correspondants aux symboles du deuxième type de codage ont une même deuxième durée temporelle différente de la première, caractérisé par le fait que chaque fréquence de délivrance correspond à une période temporelle de délivrance égale à la moitié de la durée temporelle des impulsions du type de codage sélectionné, et par le fait qu'on élabore, à ladite fréquence de délivrance sélectionnée, les échantillons du signal de sortie correspondant en additionnant (ADD), à ladite fréquence de lecture (CLK3), des échantillons tirés des échantillons numériques stockés dans la mémoire correspondante et relatifs au symbole courant avec des échantillons tirés des échantillons numériques stockés dans ladite mémoire correspondante et relatifs au symbole précédant.

4. Dispositif de transcodage en bande de base d'informations numériques destinées à être transmises sur une ligne téléphonique au sein d'un signal analogique délivré au transformateur de ligne et constitué d'impulsions respectivement associées à des symboles obtenus par le codage desdites informations numériques, caractérisé par le fait qu'il comprend des moyens de pré-traitement (PTR) aptes en présence d'une première valeur d'un signal de sélection (Q/T) à extraire desdites informations numériques, à une première fréquence de délivrance (CLK1), des premières paires successives de bits comportant chacune un premier bit dit de signe (BS) et un deuxième bit dit de magnitude (BM) de façon à former pour chaque première paire l'un des quatre symboles d'un premier type de codage en bande de base dit 2B1Q, et aptes en présence d'une deuxième valeur du signal de sélection (Q/T) à effectuer un deuxième type de codage en bande de base dit 4B3T et à délivrer, à une deuxième fréquence de délivrance (CLK2), chacun des trois symboles de ce deuxième type de codage sous la forme d'une deuxième paire de bits comportant un premier bit dit de signe (RS) et un deuxième bit dit de magnitude (BM) de valeurs prédéterminées, des première et deuxième mémoires (MM1, MM2) contenant respectivement des premiers et deuxièmes échantillons numériques respectivement représentatifs d'une partie au moins des différentes impulsions prédéterminées respectivement associées aux différents symboles des premier et deuxième types de codage, et des moyens de mise en forme (FMF) aptes à lire le contenu de la première ou de la deuxième mémoire à une même fréquence de lecture prédéterminée (CLK3) quelle que soit la valeur du signal de sélection et aptes, en fonction de la valeur du signal de sélection, à élaborer à partir du contenu de la mémoire correspondante et des valeurs successives des bits de magnitude et de signe, un signal numérique de sortie (SCH) échantillonné à ladite fréquence de lecture (CLK3), compatible avec le codage sélectionné et représentatif dudit signal analogique de transmission correspondant.

5. Dispositif selon la revendication 4, caractérisé par le fait que tous les échantillons numériques stockés dans les première et deuxième mémoires sont respectivement obtenus par deux échantillonnages différents d'une même fonction mathématique de base, et par le fait que le produit entre chaque fréquence de délivrance (CLK1, CLK2) et le nombre d'échantillons représentatifs d'une impulsion du type correspondant de codage est égal à la fréquence de lecture (CLK3).

6. Dispositif selon la revendication 4 ou 5, dans lequel les impulsions correspondants aux symboles du premier type de codage ont une même première durée temporelle, et les impulsions correspondants aux symboles du deuxième type de codage ont une même deuxième durée temporelle différente de la première, caractérisé par le fait que chaque impulsion non nulle comporte des fronts avant (FAV) et arrière (FAR) symétriques s'étendant respectivement temporellement sur les première et deuxième moitiés de ladite durée temporelle correspondante, par le fait que les première et deuxième mémoires contiennent uniquement des échantillons relatifs à l'un (FAV) des deux fronts de chaque impulsion non nulle et de polarité prédéterminée et par le fait que les moyens de mise en forme (FMF) comportent des moyens de reconstitution (IV1, IV2, CC1, CC2) aptes à élaborer les échantillons relatifs à l'autre front de chaque impulsion non nulle et de polarité prédéterminée ainsi que les échantillons relatifs aux fronts avant et arrière de chaque impulsion non nulle de polarité inverse.

7. Dispositif selon la revendication 6, caractérisé par le fait que les quatre symboles du premier type de codage correspondent respectivement à deux implusions de niveaux bas de tension de polarité inverse et à deux impulsions de niveaux haut de tension de polarité inverse, la valeur "1" du bit de signe étant affectée aux deux impulsions de niveaux bas et haut de polarité positive tandis que la valeur "0" du bit de signe est affectée aux deux autres impulsions, la valeur "1" du bit de magnitude étant affectée aux deux impulsions de niveaux bas tandis que la valeur "0" du bit de magnitude est affectée aux deux autres impulsions, par le fait que les trois symboles du deuxième type de codage correspondent respectivement à deux impulsions de niveaux de tension non nuls de polarité inverse et à une impulsion de niveau nul de tension, la valeur "1" du bit de signe étant affectée à l'impulsion de niveau non nul de polarité positive tandis que la valeur "0" du bit de signe est affectée aux deux autres impulsions, la valeur "0" du bit de magnitude étant affectée à l'impulsion de niveau nul tandis que la valeur "1" du bit de magnitude est affectée aux deux autres impulsions, par le fait que la première mémoire (MM1) comporte une première partie (MM11) contenant les échantillons représentatifs du front avant (FAV) de l'impulsion de niveau haut et de polarité positive (+3), et une deuxième partie (MM12) contenant les échantillons représentatifs du front avant (FAV) de l'impulsion de niveau bas et de polarité positive (+1), par le fait que la deuxième mémoire (MM2) contient des échantillons représentatifs du front avant (FAV) de l'impulsion de niveau non nul (+2), et par le fait que les moyens de reconstitution comportent un premier moyen inverseur (IV1) relié à la sortie de la première partie (MM11) de la première mémoire et un deuxième moyen inverseur (IV2) relié à la sortie de la deuxième partie (MM12) de la première mémoire et à la sortie de la deuxième mémoire, chaque moyen inverseur délivrant les échantillons représentatifs du front arrière de l'impulsion correspondante, ainsi qu'un premier moyen de concaténation (CC1) connecté en amont des deux moyens inverseurs et un deuxième moyen de concaténation (CC2) connecté en sortie des moyens inverseurs, le premier moyen de concaténation (CC1) recevant par ailleurs les bits de signe successifs (BS) inversés (IV3) tandis que le deuxième moyen de concaténation (CC2) reçoit par ailleurs les bits de signe successifs (BS) inversés (IV3) et temporellement retardés de la période de délivrance des symboles correspondant au codage sélectionné.

8. Dispositif selon l'une des revendications 4 à 7, dans lequel les impulsions correspondants aux symboles du premier type de codage ont une même première durée temporelle, et les impulsions correspondants aux symboles du deuxième type de codage ont une même deuxième durée temporelle différente de la première, caractérisé par le fait que chaque fréquence de délivrance correspond à une période temporelle de délivrance égale à la moitié de la durée temporelle des impulsions du type de codage sélectionné, et par le fait que les moyens de mise en forme (FMF) élaborent, à ladite fréquence de délivrance sélectionnée, les échantillons du signal de sortie correspondant (SCH) en additionnant (ADD), à ladite fréquence de lecture (CLK3), des échantillons tirés des échantillons numériques (ECHi) stockés dans la mémoire correspondante et relatifs au symbole courant avec des échantillons tirés des échantillons numériques stockés dans ladite mémoire correspondante et relatifs au symbole précédent.

9. Dispositif selon les revendications 7 et 8, caractérisé par le fait que les moyens de mise en forme (FMF) comprennent :

- un premier multiplexeur (MX2) possédant une première entrée reliée à la sortie de la deuxième partie (M12) de la première mémoire et à la sortie de la deuxième mémoire (M2) par l'intermédiaire d'un deuxième multiplexeur (MX1) commandé par le signal de sélection (Q/T), et une deuxième entrée reliée à la sortie de la première partie (M11) de la première mémoire par l'intermédiaire d'une première porte logique ET (P1) recevant par ailleurs en entrée le signal de sélection (Q/T), ce premier multiplexeur (MX2) étant commandé par les bits de magnitude successifs,
- un troisième multiplexeur (MX3) possédant une première entrée reliée à la sortie du deuxième moyen inverseur (IV2), et une deuxième entrée reliée à la sortie du premier moyen inverseur (IV1) par l'intermédiaire d'une deuxième porte logique ET (P2) recevant par ailleurs en entrée le signal de sélection, ce troisième multiplexeur (MX3) étant commandé par les bits de magnitude successifs retardés temporellement de la période de délivrance correspondant au codage sélectionné,
- un additionneur (ADD) délivrant le signal de sortie échantillonné (SCH), et possédant une première entrée reliée à la sortie du premier multiplexeur (MX2) par l'intermédiaire du premier moyen de concaténation (CC1), et une deuxième entrée reliée à la sortie du troisième multiplexeur par l'intermédiaire du deuxième moyen de concaténation (CC2).

10. Dispositif selon l'une des revendications précédantes, caractérisé par le fait que les moyens de pré-traitement comportent :

- des moyens de conversion série/parallèle aptes, en présence de la première valeur du signal de sélection, à recevoir le flot d'informations numériques d'entrée et à délivrer successivement à la première fréquence de délivrance, les paires de bits de signe (BS) et de magnitude (BM) aux moyens de mise en forme, et
- un codeur (COD) spécifique du deuxième type de codage, apte en présence de la deuxième valeur du signal de sélection, à extraire du flot d'informations numériques d'entrée des groupes successifs (GR) de quatre informations numériques, et à délivrer aux moyens de mise en forme pour chacun de ces groupes, successivement et à la deuxième fréquence de délivrance, trois paires de bits de signe et de magnitude représentatifs respectivement de trois symboles de ce deuxième type de codage.

11. Dispositif selon la revendication 10, caractérisé par le fait que le codeur spécifique comporte une mémoire principale (MP) adressable par un mot d'adresse (MAD) contenant le groupe considéré de quatre informations numériques, ladite mémoire contenant à chaque adresse un mot de six bits contenant les valeurs desdites trois paires de bits de signe et de magnitude associés à la séquence correspondante de trois symboles, des moyens d'adressage (BD8) pour adresser la mémoire principale à une fréquence de codage (CLK4) égale au tiers de la deuxième fréquence de délivrance (CLK2), et des moyens de lecture (BD9) pour délivrer, à ladite deuxième fréquence de délivrance (CLK2), les paires successives de bits de signe et de magnitude, et par le fait que les signaux d'horloge (CLK2, CLK4) correspondant respectivement aux fréquences de codage et de délivrance sont mutuellement déphasés.

## FIG.1

## FIG.2

## FIG.3

## FIG.4

## FIG.5

# FIG.6

EP 0 901 255 A1

# FIG.7

MM

**Office européen des brevets**

**RAPPORT DE RECHERCHE EUROPEENNE**

Numéro de la demande

EP 98 40 2133

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | BATRUNI R ET AL: "MIXED DIGITAL/ANALOG SIGNAL PROCESSING FOR A SINGLE-CHIP 2B1Q U-INTERFACE TRANSCEIVER" IEEE JOURNAL OF SOLID-STATE CIRCUITS, vol. 25, no. 6, 1 décembre 1990, pages 1414-1425, XP000176570 * figure 4 * | 1-11 | H04L25/49 |
| A | PATENT ABSTRACTS OF JAPAN vol. 006, no. 099 (E-111), 8 juin 1982 -& JP 57 031251 A (MATSUSHITA ELECTRIC IND CO LTD), 19 février 1982 * abrégé * | 1-11 | |
| A | PATENT ABSTRACTS OF JAPAN vol. 005, no. 192 (E-085), 8 décembre 1981 -& JP 56 114464 A (FUJITSU LTD), 9 septembre 1981 * abrégé * | 1-11 | |
| A | GB 2 063 023 A (INT STANDARD ELECTRIC CORP) 28 mai 1981 * tableaux I,II * | | **DOMAINES TECHNIQUES RECHERCHES (Int.Cl.6)** H04L |

Le présent rapport a été établi pour toutes les revendications

| Lieu de la recherche | Date d'achèvement de la recherche | Examinateur |
|---|---|---|
| LA HAYE | 3 décembre 1998 | Ghigliotti, L |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)